(19) **Europäisches Patentamt / European Patent Office / Office européen des brevets**

(11) **EP 4 131 097 A1**

(12) **EUROPEAN PATENT APPLICATION**
published in accordance with Art. 153(4) EPC

(43) Date of publication:
**08.02.2023 Bulletin 2023/06**

(51) International Patent Classification (IPC):
*G06Q 10/06* (2012.01)

(21) Application number: **21774131.3**

(52) Cooperative Patent Classification (CPC):
**G06Q 10/00; G06Q 10/06; G06Q 50/10**

(22) Date of filing: **25.03.2021**

(86) International application number:
**PCT/JP2021/012463**

(87) International publication number:
**WO 2021/193798 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2020 JP 2020056170**

(71) Applicant: **Daikin Industries, Ltd.
Osaka-shi, Osaka 530-8323 (JP)**

(72) Inventors:
• **OHGA, Takahiro
Osaka-shi, Osaka 530-8323 (JP)**
• **TAKEUCHI, Toshifumi
Osaka-shi, Osaka 530-8323 (JP)**

(74) Representative: **Global IP Europe
Patentanwaltskanzlei
Pfarrstraße 14
80538 München (DE)**

(54) **AREA RECOMMENDATION DEVICE**

(57) When recommending a seat, it is not possible to make sufficient determination only with environmental information. A region recommendation device (100) includes a usage information acquiring unit (10), an environmental information acquiring unit (20), a non-environmental information acquiring unit (30), an information storage unit (40), and a recommended region determining unit (50). The usage information acquiring unit (10) acquires usage information (11) of the target regions. The environmental information acquiring unit (20) acquires environmental information (21) in the target regions. The non-environmental information acquiring unit (30) acquires, as non-environmental information (31), at least one of biological information (31a) of a person and region feature information (31b) in the target regions. The information storage unit (40) stores information acquired by the usage information acquiring unit (10), the environmental information acquiring unit (20), and the non-environmental information acquiring unit (30). The recommended region determining unit (50) calculates a degree of similarity between multi-dimensional information points (71), and determines the one or more recommended regions (R81).

FIG. 2A

**Description**

**TECHNICAL FIELD**

The present disclosure relates to a region recommendation device.

**BACKGROUND ART**

There is a technique of recommending a comfortable seat for a target person at the time of entering a room in a free address space such as a shared office. The apparatus disclosed in PTL 1 (Japanese Unexamined Patent Application Publication No. 2014-214975) recommends a seat that is comfortable for a target person by using environmental information such as a temperature, a humidity, and an illuminance.

**SUMMARY OF INVENTION**

<Technical Problem>

When determining a comfortable seat for a target person, it is not possible to make sufficient determination only by the environmental information.

<Solution to Problem>

A region recommendation device according to a first aspect determines one or more recommended regions to be recommended to a target person from among a plurality of target regions in a target space. The region recommendation device includes a usage information acquiring unit, an environmental information acquiring unit, a non-environmental information acquiring unit, an information storage unit, and a recommended region determining unit. The usage information acquiring unit acquires usage information including at least one of a past usage history of the target regions and current availability of the target regions. The environmental information acquiring unit acquires environmental information regarding an indoor environment in the target regions. The non-environmental information acquiring unit acquires, as non-environmental information, at least one of biological information of a person in the target space and region feature information regarding equipment and peripheral information in the target regions. The information storage unit stores information acquired by the usage information acquiring unit, the environmental information acquiring unit, and the non-environmental information acquiring unit. The recommended region determining unit quantifies the information stored in the information storage unit as one or more multi-dimensional information points in a multi-dimensional space, calculates a degree of similarity between the multi-dimensional information points, and determines the one or more recommended regions.

In the region recommendation device according to the first aspect, the recommended region determining unit determines the one or more recommended regions in consideration of not only the environmental information but also the non-environmental information when determining the one or more recommended regions. Therefore, the region recommendation device can determine a region or regions comfortable for the target person in consideration of more information.

In the region recommendation device according to the first aspect, the recommended region determining unit quantifies the information stored in the information storage unit as one or more multi-dimensional information points in a multi-dimensional space, and determines the one or more recommended regions. Accordingly, the region recommendation device can determine the one or more recommended regions by comprehensively quantifying various pieces of information with one measure.

A region recommendation device according to a second aspect is the region recommendation device according to the first aspect in which the environmental information includes at least one of a temperature, a humidity, an illuminance, a color of illumination, and a noise.

A region recommendation device according to a third aspect is the region recommendation device according to the first or second aspect in which the biological information includes at least one of a body surface temperature, a core body temperature, and a pulse.

A region recommendation device according to a fourth aspect is the region recommendation device according to any one of the first to third aspects in which the region feature information includes at least one of a type of chair, a type of table, personal use or shared use, whether a window is near, a population density, presence or absence of an outlet, and proximity of OA equipment in the target regions.

A region recommendation device according to a fifth aspect is the region recommendation device according to any one of the first to fourth aspects in which, regarding the target person and the target regions, the recommended region determining unit quantifies the usage information, the environmental information, and the non-environmental information of a past as one or more past multi-dimensional information points in the multi-dimensional space, and quantifies the usage information, the environmental information, and the non-environmental information of present as one or more current multi-dimensional information points in the multi-dimensional space.

A region recommendation device according to a sixth aspect is the region recommendation device according to the fifth aspect in which the recommended region determining unit defines a multi-dimensional comfortable region including all or some of the one or more past multi-dimensional information points, calculates a multi-dimensional comfortable region centroid that is the centroid of the one or more past multi-dimensional information points included in the multi-dimensional comfortable region, and determines the one or more recommended regions on the basis of the multi-dimensional comfortable region centroid and the one or more current multi-dimensional information points.

## BRIEF DESCRIPTION OF DRAWINGS

Fig. 1 is a plan view of a target space.
Fig. 2A is a configuration diagram of a region recommendation device.
Fig. 2B is a configuration diagram of the region recommendation device.
Fig. 2C is a configuration diagram of the region recommendation device.
Fig. 3 is a diagram illustrating region information.
Fig. 4 is a diagram illustrating user information.
Fig. 5 is a diagram illustrating usage information.
Fig. 6 is a diagram illustrating environmental information.
Fig. 7 is a diagram illustrating biological information.
Fig. 8 is a diagram illustrating region feature information.
Fig. 9 is a diagram illustrating a screen of signage.
Fig. 10A is a flowchart of a recommended region determining process.
Fig. 10B is the flowchart of the recommended region determining process.
Fig. 11 is a diagram illustrating past usage information.
Fig. 12 is a diagram illustrating past information.
Fig. 13 is a diagram illustrating past multi-dimensional information points.
Fig. 14A is a diagram illustrating past multi-dimensional information points in a multi-dimensional space.
Fig. 14B illustrates past multi-dimensional information points and multi-dimensional comfortable region after data cleaning.
Fig. 14C illustrates a multi-dimensional comfortable region centroid.
Fig. 14D illustrates current multi-dimensional information points in a multi-dimensional space.
Fig. 14E is a diagram illustrating a distance between a multi-dimensional comfortable region centroid and current multi-dimensional information points.
Fig. 15 is a diagram illustrating usage information regarding currently unused target regions.
Fig. 16 is a diagram illustrating current information.
Fig. 17 illustrates current multi-dimensional information points.

## DESCRIPTION OF EMBODIMENTS

(1) Overall Configuration

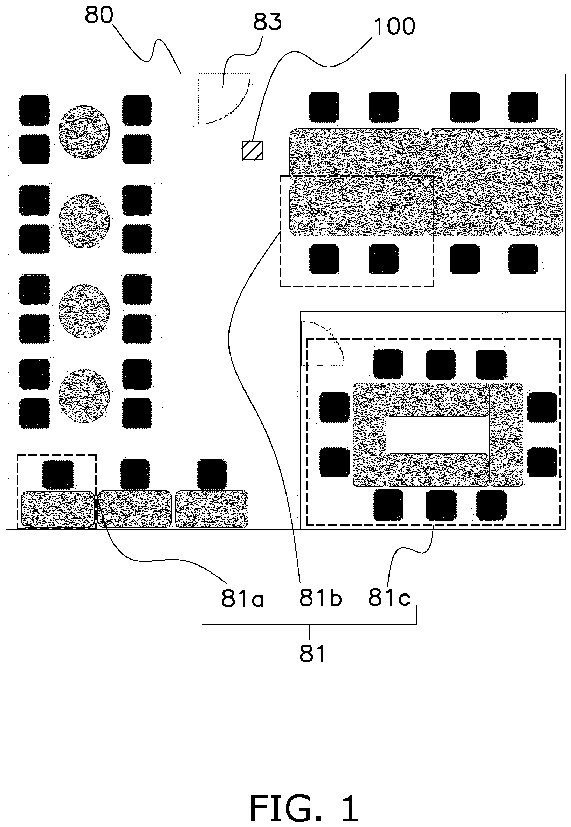

A region recommendation device 100 determines one or more recommended regions R81 to be recommended to a target person from among a plurality of target regions 81 in a target space 80. The target space 80 is, for example, a free address space such as a shared office. Fig. 1 illustrates a plan view of the target space 80. The region recommendation device 100 is installed near an entrance 83 of the target space 80, for example. The target regions 81 are a plurality of regions provided to users of the target space 80. The target regions 81 are given regions such as seats, rooms, or spaces. In Fig. 1, a single-person seat 81a, a two-person seat 81b, and a meeting room 81c are illustrated as examples of the target regions 81. Here, the term "user" is used to mean a user of the target space 80. The term "target person" is used to mean a person who receives region recommendation by the region recommendation device 100 among users of the target space 80.

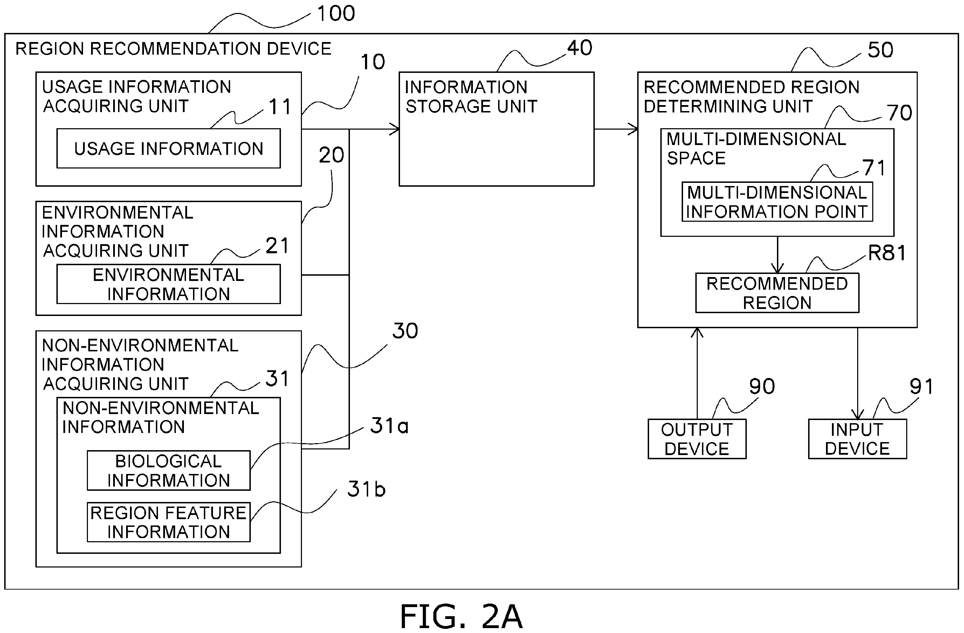

As illustrated in Fig. 2A, the region recommendation device 100 mainly includes a usage information acquiring unit 10, an environmental information acquiring unit 20, a non-environmental information acquiring unit 30, an information storage unit 40, a recommended region determining unit 50, an input unit 90, and an output unit 91.

The region recommendation device 100 further includes a control arithmetic device and a storage device. A processor such as a CPU or a GPU can be used as the control arithmetic device. The control arithmetic device reads a program stored in the storage device and performs predetermined image processing and arithmetic processing in accordance with the program. Furthermore, the control arithmetic device can write an arithmetic result into the storage device and read information stored in the storage device according to the program. The usage information acquiring unit 10, the environmental information acquiring unit 20, the non-environmental information acquiring unit 30, the information storage unit 40, the recommended region determining unit 50, the input unit 90, and the output unit 91 are various functional blocks implemented by the control arithmetic device.

(2) Detailed Configuration

(2-1) Usage Information Acquiring Unit

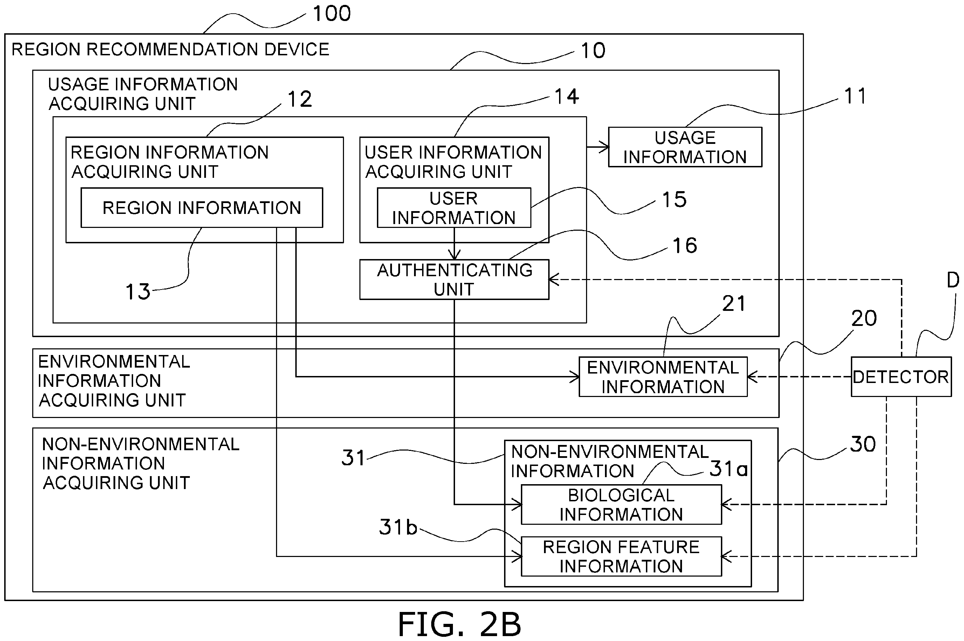

The usage information acquiring unit 10 acquires usage information 11 including at least one of a past usage history of the target regions 81 and current availability of the target regions 81. Fig. 2B is a diagram illustrating details of the usage information acquiring unit 10, the environmental information acquiring unit 20, and the non-environmental information acquiring unit 30 in Fig. 2A. As illustrated in Fig. 2B, the usage information acquiring unit 10 includes a region information acquiring unit 12, a user information acquiring unit 14, and an authenticating unit 16.

(2-1-1) Region Information Acquiring Unit

As illustrated in Fig. 2B, the region information acquiring unit 12 acquires region information 13 that is information regarding the target regions 81.

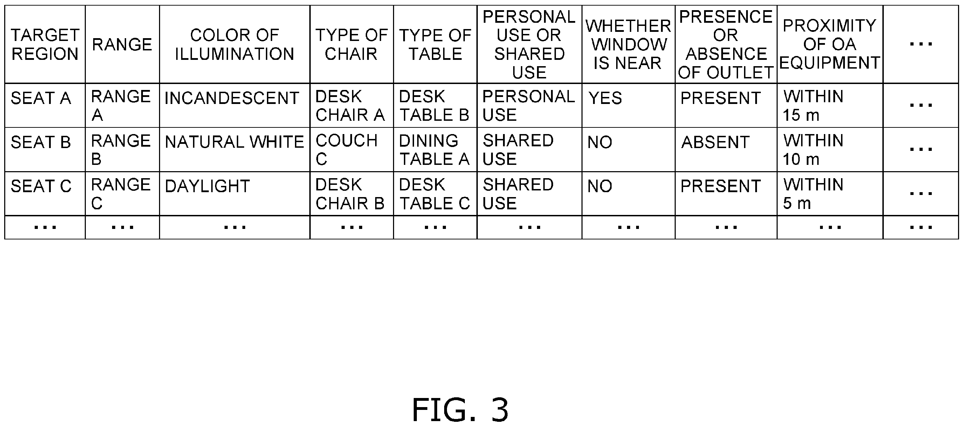

Fig. 3 illustrates an example of the region information 13. The region information 13 includes "target region" and "range" as main items. Items subsequent to "color of illumination" will be described later.
The names of the target regions 81 are stored as "target region". In Fig. 3, "seat A" and the like are stored.
Coordinate ranges of "target region" are stored as "range". In Fig. 3, "range A" and the like are stored.
The region information 13 has content that can be set in advance.

(2-1-2) User Information Acquiring Unit

As illustrated in Fig. 2B, the user information acquiring unit 14 acquires user information 15 that is information regarding users of the target space 80.

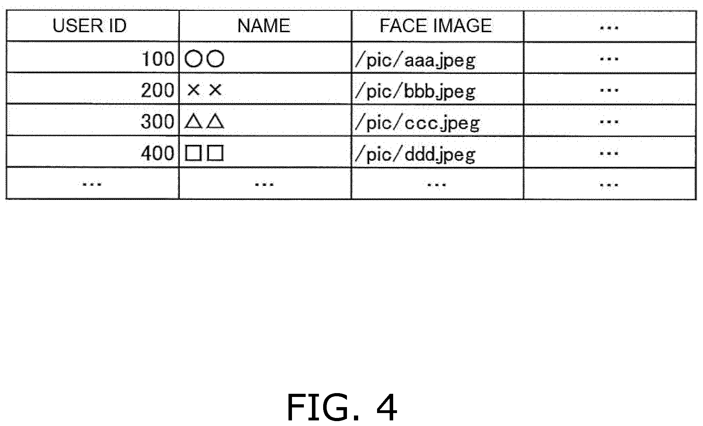

Fig. 4 illustrates an example of the user information 15. The user information 15 includes "user ID", "name", and "face image" as main items.
The user information acquiring unit 14 registers users of the target space 80. The user information acquiring unit 14 receives information such as "name" and "face image" from the users, and issues "user ID" that uniquely identifies the users. These pieces of information are stored in the user information 15. In Fig. 4, "100" and the like are stored as "user ID", "AA" and the like are stored as "name", and "/pic/aaa.jpeg" and the like are stored as "face images".

(2-1-3) Authenticating Unit

The authenticating unit 16 authenticates users in the target space 80. For example, face authentication, fingerprint authentication, password authentication, or the like is used for authentication. In the present embodiment, the authenticating unit 16 authenticates the users by face authentication. Specifically, as illustrated in Fig. 2B, the authenticating unit 16 authenticates the users on the basis of face images detected in the target space 80 and the user information 15. For example, an object detection camera or the like is used to detect the face images. In Fig. 2B, an object detection camera or the like is illustrated as a detector D.
The authenticating unit 16 can output user IDs of the authenticated users.

(2-1-4) Usage Information

As illustrated in the Fig. 2B, the usage information acquiring unit 10 acquires the usage information 11 from the region information 13, the user information 15, and the function of the authenticating unit 16.

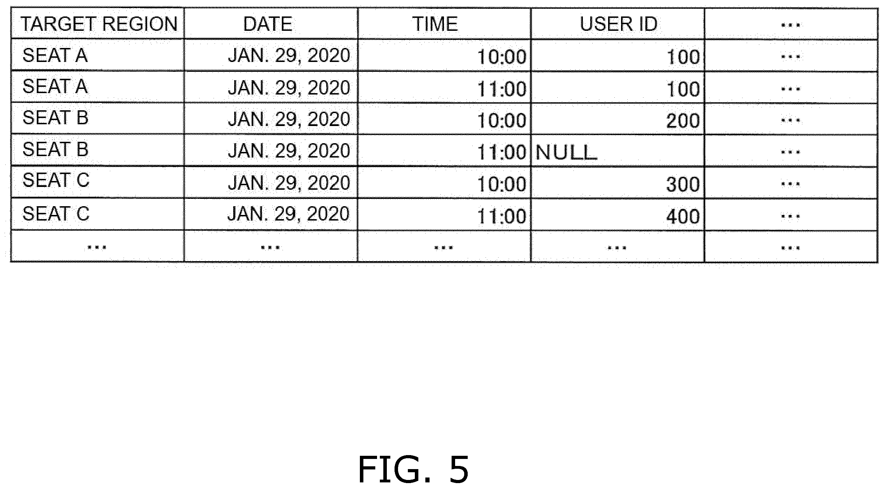

Fig. 5 illustrates an example of the usage information 11. The usage information 11 includes "target region", "date", "time", and "user ID" as main items.
The "target region" is acquired from "target region" of the region information 13. In Fig. 5, "seat A" and the like are stored.

A date on which the usage information 11 is acquired is stored as "date". In Fig. 5, "Jan. 29, 2020" is stored. "Date" is acquired from, for example, an internal timer of the control arithmetic device included in the region recommendation device 100.

A time at which the usage information 11 is acquired is stored as "time". In the present embodiment, the usage information 11, and environmental information 21 and non-environmental information 31, which will be described later, are acquired every hour. Therefore, in Fig. 5, the time of every hour such as "10:00" and "11:00" is stored. "Time" is acquired from, for example, the internal timer or the like of the control arithmetic device included in the region recommendation device 100.

User IDs of users who use "target region" at "time" and on "date" are stored as "user ID". In Fig. 5, "100", "NULL", and the like are stored. "NULL" indicates that "target region" is not used. "User ID" is acquired from the region information 13, the user information 15, and the function of the authenticating unit 16.

Specifically, a method of acquiring the usage information 11 acquired at 11:00 on Jan. 29, 2020 will be described. First, the record in the first row of the region information 13 illustrated in Fig. 3 is acquired. "Target region" of the record is "seat A". This "seat A" is stored as "target region" of the usage information 11. Since the usage information 11 is acquired at 11:00 on Jan. 29, 2020, "Jan. 29, 2020" and "11:00" are stored as "date" and "time" of the usage information 11, respectively. In order to acquire "user ID" of the usage information 11, the usage information acquiring unit 10 authenticates a user in "range A" using the authenticating unit 16 since "range" of the record in the first row of the region information 13 illustrated in Fig. 3 is "range A". Since "100" is output as "user ID" as a result of the authentication, "100" is stored as "user ID" of the usage information 11. The record acquired here corresponds to the record in the second row of the usage information 11 in Fig. 5. When this process is performed on all records of the region information 13, the usage information 11 at 11:00 on Jan. 29, 2020 can be acquired.

The following can be found from the usage information 11 in Fig. 5. "Seat A" is used by a user with user ID "100" at the time points "10:00" and "11:00". "Seat B" is used by a user with user ID "200" at "10:00", but is not used by anyone at "11:00". "Seat C" is used by a user with user ID "300" at "10:00", but is used by a user with user ID "400" at "11:00".

(2-2) Environmental Information Acquiring Unit

As illustrated in Fig. 2B, the environmental information acquiring unit 20 acquires the environmental information 21 regarding an indoor environment in the target regions 81. The environmental information 21 includes at least one of a temperature, a humidity, an illuminance, a color of illumination, and a noise.

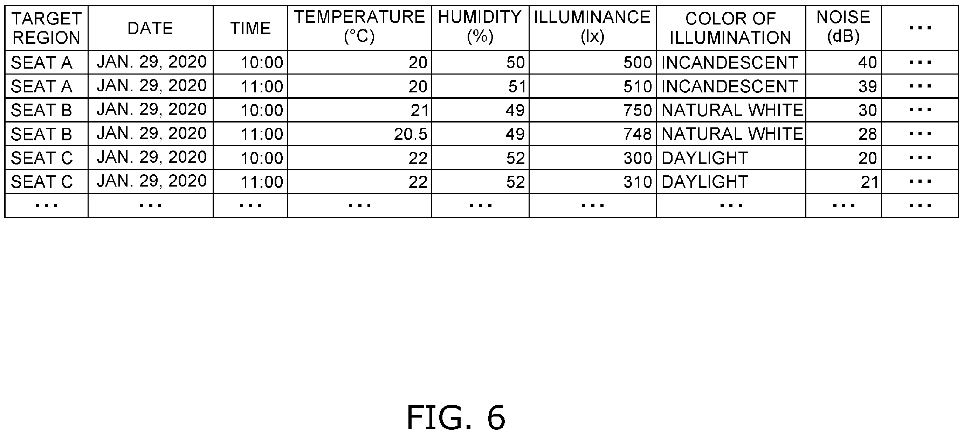

Fig. 6 illustrates an example of the environmental information 21. The environmental information 21 includes, as main items, "target region", "date", "time", "temperature", "humidity", "illuminance", "color of illumination", and "noise".

"Target region", "date", and "time" are as described above.

The temperature, the humidity, the illuminance, and the noise of "target region" at "time" and on "date" are stored as "temperature", "humidity", "illuminance", and "noise".

The color of illumination of "target region" is stored as "color of illumination".

"Temperature" is acquired from, for example, a temperature sensor or the like. In Fig. 6, values ranging from 20°C to 22°C are stored.

"Humidity" is acquired from, for example, a humidity sensor or the like. In Fig. 6, values ranging from 49% to 52% are stored.

"Illuminance" is acquired from, for example, an illuminance sensor or the like. In Fig. 6, values ranging from 300 lx to 750 lx are stored.

"Color of illumination" is acquired from "color of illumination" of the region information 13 illustrated in Fig. 3. In Fig. 6, "incandescent", "natural white", and "daylight" are stored.

"Noise" is acquired from, for example, a sound collecting microphone or the like. In Fig. 6, values ranging from 20 dB to 40 dB are stored.

In Fig. 2B, the above temperature sensor and the like are illustrated as the detector D.

Specifically, a method of acquiring the environmental information 21 acquired at 11:00 on Jan. 29, 2020 will be described. First, the record in the first row of the region information 13 illustrated in Fig. 3 is acquired. "Target region" of the record is "seat A". This "seat A" is stored as "target region" of the environmental information 21. Since the environmental information 21 is acquired at 11:00 on Jan. 29, 2020, "Jan. 29, 2020" and "11:00" are stored as "date" and "time" of the environmental information 21, respectively. Values acquired from the temperature sensor and the like at 11:00 on Jan. 29, 2020 are stored as "temperature", "humidity", "illuminance", and "noise" of the environmental information 21. Since "color of illumination" in the record in the first row of the region information 13 illustrated in Fig. 3 is "incandescent", "incandescent" is stored as "color of illumination" of the environmental information 21. The record acquired here corresponds to the record in the second row of the environmental information 21 in Fig. 6. When this process is performed on all records of the region information 13, the environmental information 21 at 11:00 on Jan. 29, 2020 can be acquired.

(2-3) Non-Environmental Information Acquiring Unit

As illustrated in Fig. 2B, the non-environmental information acquiring unit 30 acquires, as the non-environmental information 31, at least one of biological information 31a of a person in the target space 80 and region feature information 31b regarding equipment and peripheral information in the target regions 81.

(2-3-1) Biological Information

The biological information 31a includes at least one of a body surface temperature, a core body temperature, and a pulse.

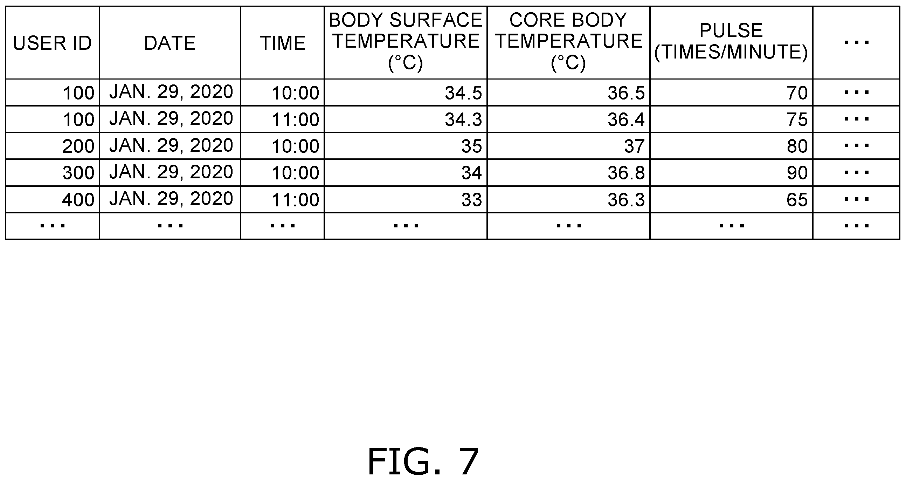

Fig. 7 illustrates an example of the biological information 31a. The biological information 31a includes, as main items, "user ID", "date", "time", "body surface temperature", "core body temperature", and "pulse".

"User ID" is acquired from the user information 15 and the function of the authenticating unit 16. In Fig. 7, "100" and the like are stored.

"Date" and "time" are as described above.

The body surface temperature, the core body temperature, and the pulse of a user indicated by "user ID" at "time" and on "date" are stored as "body surface temperature", "core body temperature", and "pulse", respectively.

"Body surface temperature" is acquired from, for example, a thermocamera or the like. In Fig. 7, values ranging from 33°C to 35°C are stored.

"Core body temperature" is acquired from, for example, a non-contact vital sensor or the like. In Fig. 7, values ranging from 36.3°C to 37°C are stored.

The "pulse" is acquired from, for example, a non-contact vital sensor or the like. In Fig. 7, values ranging from 65 times/minute to 90 times/minute are stored.

In Fig. 2B, the above thermocamera or the like is illustrated as the detector D.

Specifically, a method of acquiring the biological information 31a acquired at 11:00 on Jan. 29, 2020 will be described. The non-environmental information acquiring unit 30 authenticates users in the target space 80 by the function of the authenticating unit 16. For example, it is assumed that a user whose "user ID" is "100" is authenticated. At this time, "100" is stored as "user ID" of the biological information 31a. Since the biological information 31a is acquired at 11:00 on Jan. 29, 2020, "Jan. 29, 2020" and "11:00" are stored as "date" and "time" of the biological information 31a, respectively. Values acquired from a thermocamera or the like at 11:00 on Jan. 29, 2020 are stored as "body surface temperature", "core body temperature", and "pulse". The record acquired here corresponds to the record in the second row of the biological information 31a in Fig. 7. When this process is performed for all users in the target space 80, the biological information 31a at 11:00 on Jan. 29, 2020 can be acquired.

(2-3-2) Region Feature Information

The region feature information 31b includes at least one of a type of chair, a type of table, a personal seat or not, whether a window is near, a population density, the presence or absence of an outlet, and the proximity of OA equipment in the target regions 81.

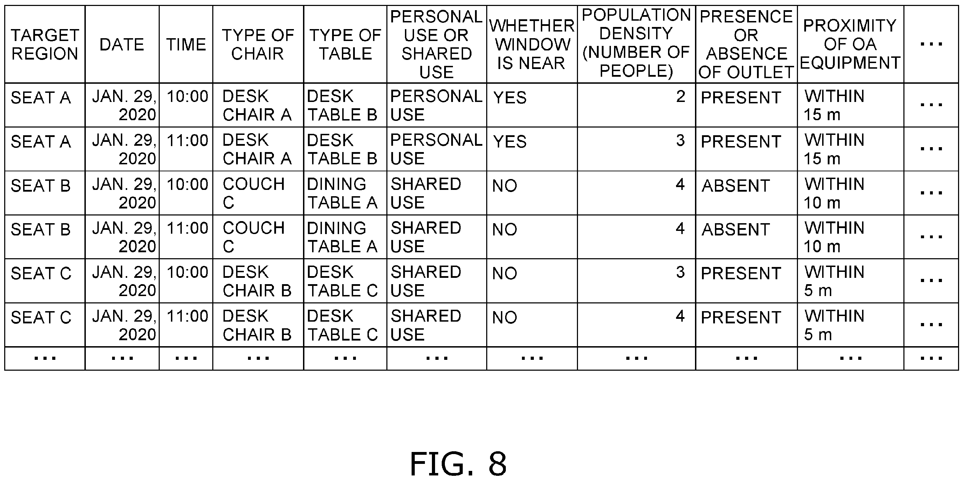

Fig. 8 illustrates an example of the region feature information 31b. The region feature information 31b includes, as main items, "target region", "date", "time", "type of chair", "type of table", "personal use or shared use", "whether window is near", "population density", "presence or absence of outlet", and "proximity of OA equipment".

The type of chair, the type of table, a personal seat or not, whether a window is near, the presence or absence of an outlet, and the proximity of OA equipment in "target region" are stored as "type of chair", " type of table", "personal use or shared use", "whether window is near", "presence or absence of outlet", and "proximity of OA equipment".

The population density of "target region" at "time" and on "date" is stored as "population density".

"Target region", "date", and "time" are as described above.

"Type of chair", "type of table", "personal use or shared use", "whether window is near", "presence or absence of outlet", and "proximity of OA equipment" are acquired from "type of chair", "type of table", "personal use or shared use", "whether window is near", "presence or absence of outlet", and "proximity of OA equipment" of the region information 13 illustrated in Fig. 3.

In Fig. 8, "desk chair A" and the like are stored as "type of chair". "Desk chair A" and the like are values categorized in advance.

In Fig. 8, "desk table B" and the like are stored as "type of table". "Desk table B" and the like are values categorized in advance.

In Fig. 8, "personal use" and "shared use" are stored as "personal use or shared use".

In Fig. 8, "Yes" and "No" are stored as "whether window is near".

In Fig. 8, "presence" and "absence" are stored as "presence or absence of outlet".

In Fig. 8, "within 15 m" and the like are stored as "proximity of OA equipment". "Within 15 m" and the like are values obtained by categorizing the distances from the target regions 81 to OA equipment in advance.

"Population density" is the number of people within predetermined ranges from the target regions 81. "Population density" is calculated using an object detection camera or the like, for example. In Fig. 2B, an object detection camera or the like is illustrated as a detector D. In Fig. 8, values ranging from 2 to 4 people are stored.

Specifically, a method of acquiring the region feature information 31b acquired at 11:00 on Jan. 29, 2020 will be described. First, the record in the first row of the region information 13 illustrated in Fig. 3 is acquired. "Target region" of the record is "seat A". This "seat A" is stored as "target region" of the region feature information 31b. Since the region feature information 31b is acquired at 11:00 on Jan. 29, 2020, "Jan. 29, 2020" and "11:00" are stored as "date" and "time" of the region feature information 31b, respectively. "Desk chair A" and the like that are values of the same item name of the record in the first row of the region information 13 are stored as "type of chair", "type of table", "personal use or shared use", "whether window is near", "presence or absence of outlet", and "proximity of OA equipment" of the region feature information 31b. Values calculated using an object detection camera or the like at 11:00 on Jan. 29, 2020 are stored as "population density" of the region feature information 31b. The record acquired here corresponds to the record in the second row of the region feature information 31b in Fig. 8. When this process is performed on all records of the region information 13, the region feature information 31b at 11:00 on Jan. 29, 2020 can be acquired.

(2-4) Information Storage Unit

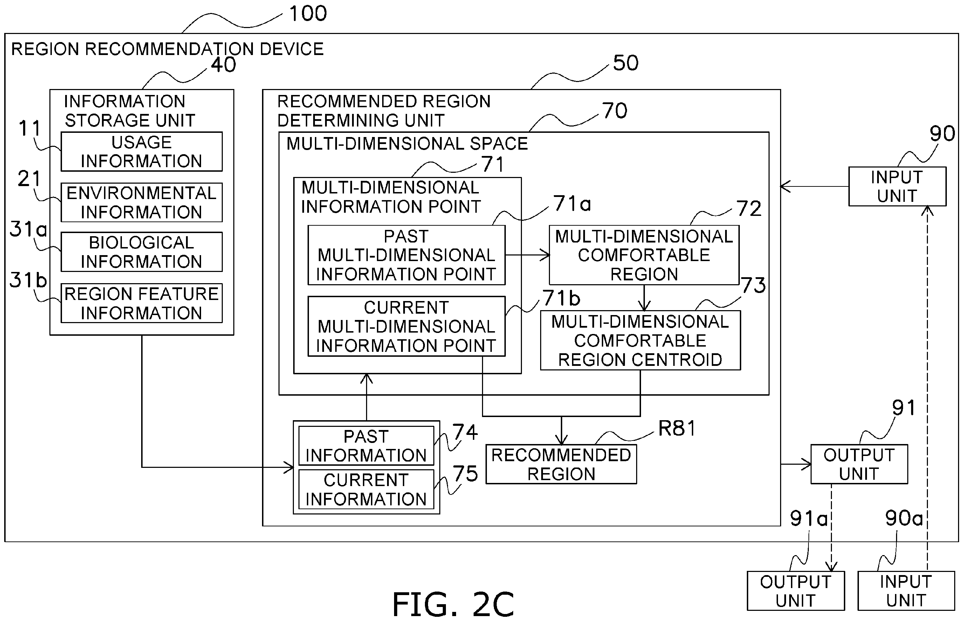

Fig. 2C is a diagram illustrating details of the information storage unit 40, the recommended region determining unit 50, the input unit 90, and the output unit 91 in Fig. 2A. As illustrated in Fig. 2C, the information storage unit 40 stores the usage information 11 acquired by the usage information acquiring unit 10, the environmental information 21 acquired by the environmental information acquiring unit 20, and the biological information 31a and the region feature information 31b acquired by the non-environmental information acquiring unit 30. These pieces of information are stored in the storage device included in the region recommendation device 100.

(2-5) Recommended Region Determining Unit

As illustrated in Fig. 2C, when a target person receives region recommendation, the recommended region determining unit 50 quantifies the information stored in the information storage unit 40 as one or more multi-dimensional information points 71 in a multi-dimensional space 70, calculates a degree of similarity between the multi-dimensional information points 71, and determines a recommended region R81.

Specifically, regarding the target person and the target regions 81, the recommended region determining unit 50 quantifies the usage information 11, the environmental information 21, and the non-environmental information 31 of the past as one or more past multi-dimensional information points 71a in the multi-dimensional space 70, and quantifies the usage information 11, the environmental information 21, and the non-environmental information 31 of the present as one or more current multi-dimensional information points 71b in the multi-dimensional space 70.

The usage information 11, the environmental information 21, and the non-environmental information 31 of the past regarding the target person and the target regions 81 are the usage information 11, the environmental information 21, and the non-environmental information 31 regarding the target person and the target regions 81 stored before the date and time when the target person receives the region recommendation. Quantifying these pieces of information as the one or more past multi-dimensional information points 71a in the multi-dimensional space 70 refers to creating unified past information 74 by joining these pieces of information, quantifying the past information 74, and acquiring the one or more past multi-dimensional information points 71a. Since the one or more past multi-dimensional information points 71a are quantified, they can be mapped to the multi-dimensional space 70 having each item of the one or more past multi-dimensional information points 71a as an axis.

The usage information 11, the environmental information 21, and the non-environmental information 31 of the present regarding the target person and the target regions 81 are the usage information 11, the environmental information 21, and the non-environmental information 31 regarding the target person and the unused target regions 81 at the date and time when the target person receives the region recommendation. Quantifying these pieces of information as the one or more current multi-dimensional information points 71b in the multi-dimensional space 70 refers to creating unified current information 75 by joining these pieces of information, quantifying the current information 75, and acquiring the one or more current multi-dimensional information points 71b. Since the one or more current multi-dimensional information points 71b are quantified, they can be mapped to the multi-dimensional space 70 having each item of the one or more current multi-dimensional information points 71b as an axis.

The recommended region determining unit 50 further defines a multi-dimensional comfortable region 72 including all or some of the one or more past multi-dimensional information points 71a, calculates a multi-dimensional comfortable region centroid 73 that is the centroid of the one or more past multi-dimensional information points 71a included in the multi-dimensional comfortable region 72, and determines the recommended region R81 on the basis of the multi-dimensional comfortable region centroid 73 and the current multi-dimensional information points 71b.

The definition of the multi-dimensional comfortable region 72 including all or some of the one or more past multi-dimensional information points 71a means that data cleaning such as outlier exclusion is performed on the one or more past multi-dimensional information points 71a, and a region in the multi-dimensional space 70 including the one or more past multi-dimensional information points 71a after the data cleaning is defined as the multi-dimensional comfortable region 72. When the multi-dimensional comfortable region 72 is defined, the multi-dimensional comfortable region centroid 73 that is the centroid of the one or more past multi-dimensional information points 71a included in the multi-dimensional comfortable region 72 is calculated. Then, distances are defined in the multi-dimensional space 70 as degrees of similarity between the multi-dimensional information points 71, and distances between the multi-dimensional comfortable region centroid 73 and each of current multi-dimensional information points 71b are calculated. The recommended region determining unit 50 determines, as the recommended region R81, a target region 81 associated with the current multi-dimensional information point 71b closest from the multi-dimensional comfortable region centroid 73.

Details of a recommended region determining process will be described later.

(2-6) Input Unit

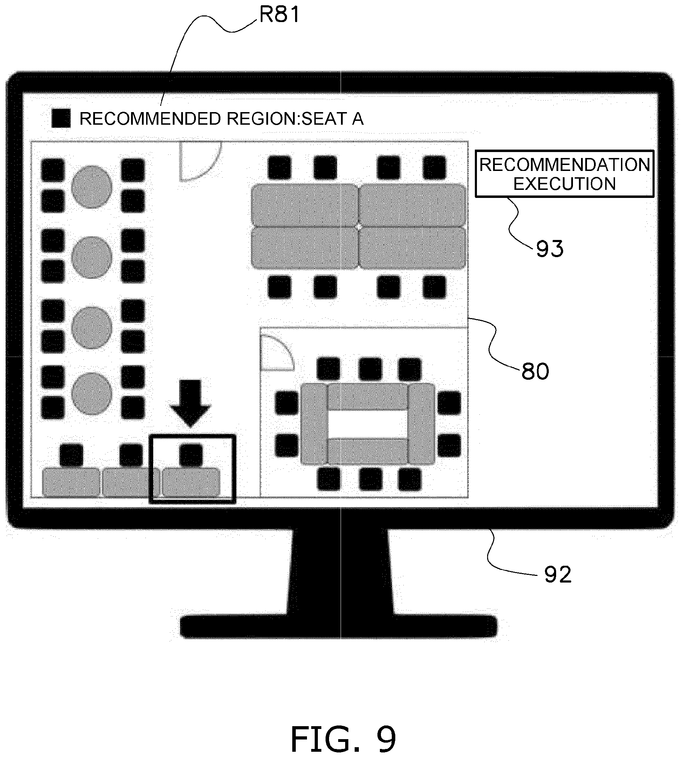

As illustrated in Fig. 2C, the input unit 90 receives an instruction to start the recommended region determining process from the target person through an input device 90a, and transmits the instruction to the recommended region determining unit 50. The input device 90a is, for example, a screen of signage 92 including a touch panel. Fig. 9 illustrates the screen of the signage 92 including a touch panel. In Fig. 9, a recommendation execution button 93 is illustrated as one related to the input unit 90. When the target person touches the recommendation execution button 93, the recommended region determining process is started by the function of the input unit 90.

(2-7) Output Unit

As illustrated in Fig. 2C, the output unit 91 receives the region information 13 of the recommended region R81 from the recommended region determining unit 50 and outputs the region information 13 on an output device 91a. The output unit 91 performs screen output, audio output, and the like. In the present embodiment, a case of screen output is assumed. The output device 91a is, for example, a screen of the signage 92. Fig. 9 illustrates the recommended region R81 and the layout diagram of the target space 80 as those related to the output unit 91. In Fig. 9, "seat A" is output as the name of the recommended region R81. In the layout diagram of the target space 80, the position of "seat A", which is the recommended region R81, is indicated by an arrow.

(3) Recommended Region Determining Process

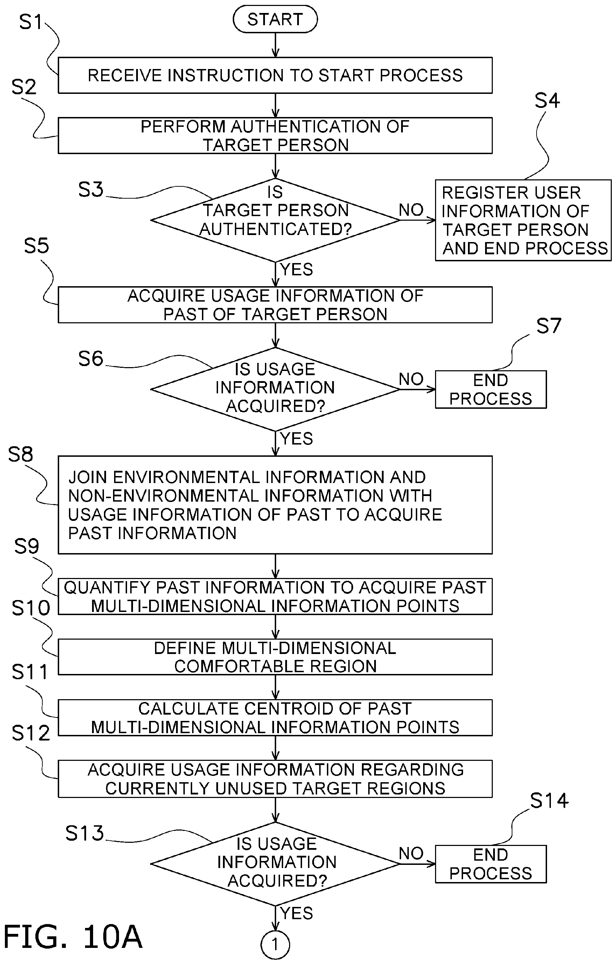

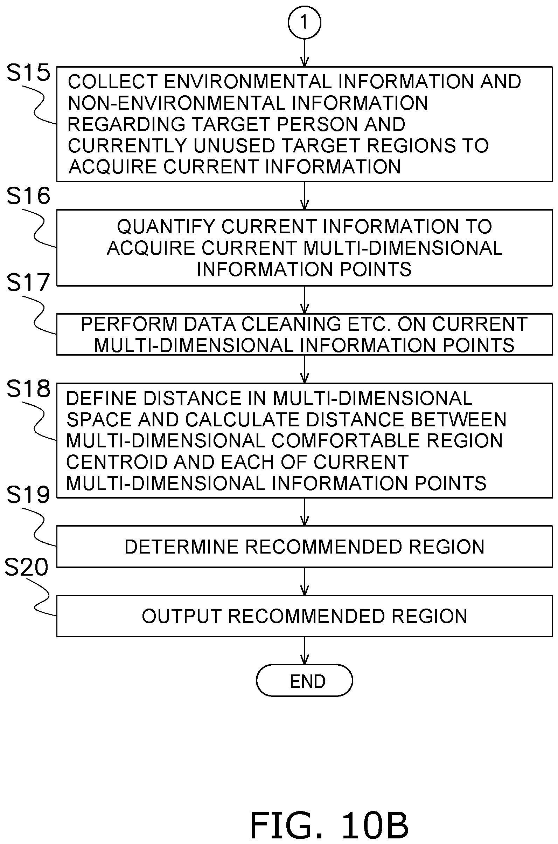

The recommended region determining process will be described with reference to the flowchart in Fig. 10A and Fig. 10B.

In order to receive region recommendation, a target person transmits an instruction to start the recommended region determining process from the input device 90a to the region recommendation device 100.

As illustrated in step S1, the region recommendation device 100 receives the instruction to start the recommended region determining process by the function of the input unit 90. As illustrated in step S2, the region recommendation device 100 performs authentication of the target person using the authenticating unit 16. As illustrated in step S3, if the target person is authenticated, the region recommendation device 100 acquires "user ID" output from the authenticating unit 16, and proceeds to step S5. Here, it is assumed that the acquired "user ID" of the target person is "100". As illustrated in step S3, if the target person is not authenticated, since the usage information 11 of the past and the like do not exist for unauthenticated target persons, the region recommendation device 100 is unable to perform the recommended region determining process. Therefore, as illustrated in step S4, the region recommendation device 100 registers the user information 15 of the target person using the user information acquiring unit 14, and ends the recommended region determining process. When ending the recommended region determining process, the region recommendation device 100 may, for example, output "unable to recommend a region because of the absence of past usage history" on the output device 91a using the function of the output unit 91.

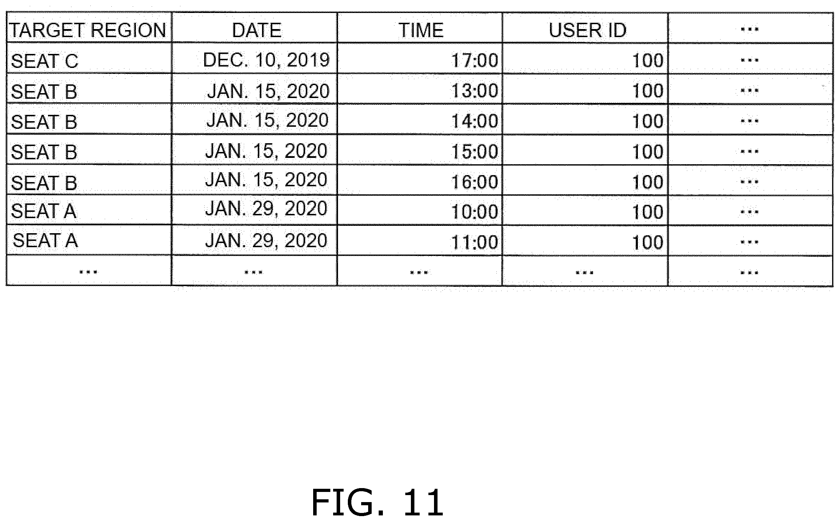

Upon acquiring "user ID" of the target person, as illustrated in step S5, the region recommendation device 100 acquires the current date and time from the internal timer of the control arithmetic device, and acquires the usage information 11 regarding the target person before the current date and time. Specifically, if the current date and time is 13:00 on Jan. 30, 2020, the region recommendation device 100 extracts records in which "date" and "time" are earlier than "13:00" on "Jan. 30, 2020" and "user ID" is "100" from the usage information 11. As illustrated in step S6, if the usage information 11 of the past regarding the target person is acquired, the process proceeds to step S8. Fig. 11 illustrates an example of the usage information 11 of the past. In Fig. 11, the target person uses "seat C" at "17:00" on "Dec. 10, 2019". Furthermore, the target person uses "seat B" from "13:00" to "15:00" on "Jan. 15, 2020". Furthermore, the target person uses "seat A" from "10:00" to "11:00" on "Jan. 29, 2020". Normally, once the target person is authenticated, the target person is assumed to have used the target space 80 in the past, and thus, it is possible to acquire the usage information 11 of the past regarding the target person. However, if it is not possible to acquire the usage information 11 of the past regarding the target person as illustrated in step S6, the region recommendation device 100, for example, outputs "unable to recommend a region because of the absence of past usage history" on the output device 91a using the function of the output unit 91, and ends the recommended region determining process as illustrated in step S7.

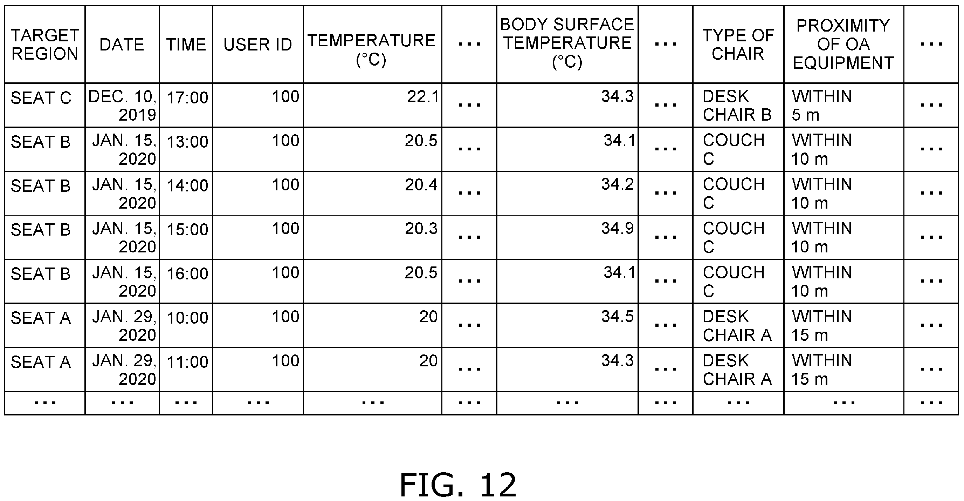

Upon acquiring the usage information 11 of the past, as illustrated in step S8, the region recommendation device 100 joins the environmental information 21 and the non-environmental information 31 with the usage information 11 of the past to acquire past information 74. Specifically, the environmental information 21 and the region feature information 31b are joined using "target region", "date", and "time" of the usage information 11 of the past as keys. This join is left outer join in which the usage information 11 of the past is set to the left. Furthermore, the region recommendation device 100 joins the biological information 31a with "user ID", "date", and "time" of the usage information 11 of the past as keys. This join is left outer join in which the usage information 11 of the past is set to the left. In this way, the region recommendation device 100 acquires the past information 74 in which the usage information 11, the environmental information 21, and the non-environmental information 31 of the past regarding the target person are unified. Fig. 12 illustrates an example of the past information 74. Fig. 12 illustrates "temperature" as a representative of the environmental information 21, "body surface temperature" as a representative of the biological information 31a, and "type of chair" and "proximity of OA equipment" as a representative of the region feature information 31b.

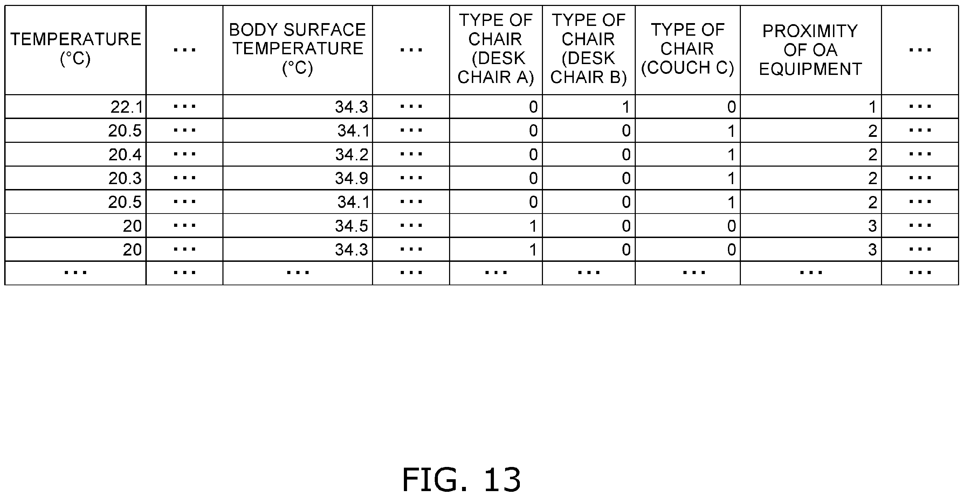

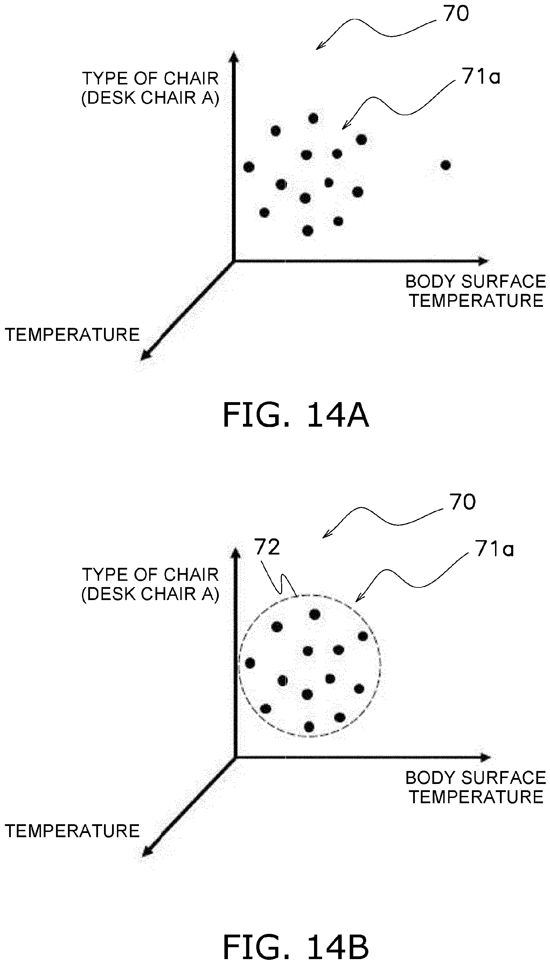

Upon acquiring the past information 74, as illustrated in step S9, the region recommendation device 100 quantifies the past information 74 to acquire the one or more past multi-dimensional information points 71a. Numerical data such as "temperature" and "humidity" has already been quantified. Nominal scale data such as "type of chair" and "type of table" is quantified by, for example, one-hot encoding. A numerical value is assigned to ordinal scale data such as "proximity of OA equipment" according to the order, for example. Fig. 13 illustrates an example of the past multi-dimensional information points 71a. In Fig. 13, in particular, the nominal scale "type of chair" and the ordinal scale "proximity of OA equipment" are quantified. In addition, in terms of points in the multi-dimensional space 70, "target region", "date", "time", and "user ID" are excluded from the past multi-dimensional information points 71a in Fig. 13. Fig. 14A illustrates the past multi-dimensional information points 71a in the multi-dimensional space 70. In Fig. 14A, only three dimensions are drawn for visualization.

Upon acquiring the past multi-dimensional information points 71a, as illustrated in step S10, the region recommendation device 100 performs data cleaning such as outlier exclusion on the past multi-dimensional information points 71a to define the multi-dimensional comfortable region 72. As the data cleaning, for example, outlier exclusion, missing value exclusion, or the like is performed. In the outlier exclusion, for example, a mean and a standard deviation are calculated for each of the items constituting the past multi-dimensional information points 71a, and past multi-dimensional information points 71a having an item value separated from the mean by three times or more of the standard deviation are excluded. In the missing value exclusion, for example, past multi-dimensional information points 71a having a missing value in the item values constituting the past multi-dimensional information points 71a are excluded. A region including the past multi-dimensional information points 71a after the data cleaning is defined as the multi-dimensional comfortable region 72. Fig. 14B illustrates the past multi-dimensional information points 71a after the data cleaning and the multi-dimensional comfortable region 72. By the outlier exclusion, one point of the past multi-dimensional information points 71a, which is drawn away to the right in Fig. 14A, is excluded.

Note that the region recommendation device 100 may perform scaling in addition to the data cleaning. Scaling is a process of aligning the scale of each item. In the present embodiment, distances are used to determine the recommended region R81. Therefore, it may be important to align the scale so that the each item contributes equally to the distances. As the scaling, for example, normalization, standardization, or the like is performed. In the normalization, the numerical value of each item is converted to 0 or more and 1 or less. In the standardization, the distribution of each item is converted into a distribution with a mean of 0 and a standard deviation of 1.

The region recommendation device 100 may perform reduction of dimensions in addition to the data cleaning. In the present embodiment, distances are used to determine the recommended region R81. If the dimensions are too large, it may be difficult to compare distances. In such a case, reduction of dimensions is effective. As the reduction of dimensions, for example, principal component analysis or the like is performed. Principal component analysis reduces dimensions by calculating a small number of items that aggregate information and using these items instead.

Upon defining the multi-dimensional comfortable region 72, as illustrated in step S11, the region recommendation device 100 calculates the multi-dimensional comfortable region centroid 73, which is the centroid of past multi-dimensional information points 71a included in the multi-dimensional comfortable region 72. The multi-dimensional comfortable region centroid 73 is calculated using, for example, the following equation.

## Math. 1

$$r^{(G)} = \frac{\sum_i m_i r^{(i)}}{\sum_i m_i}$$

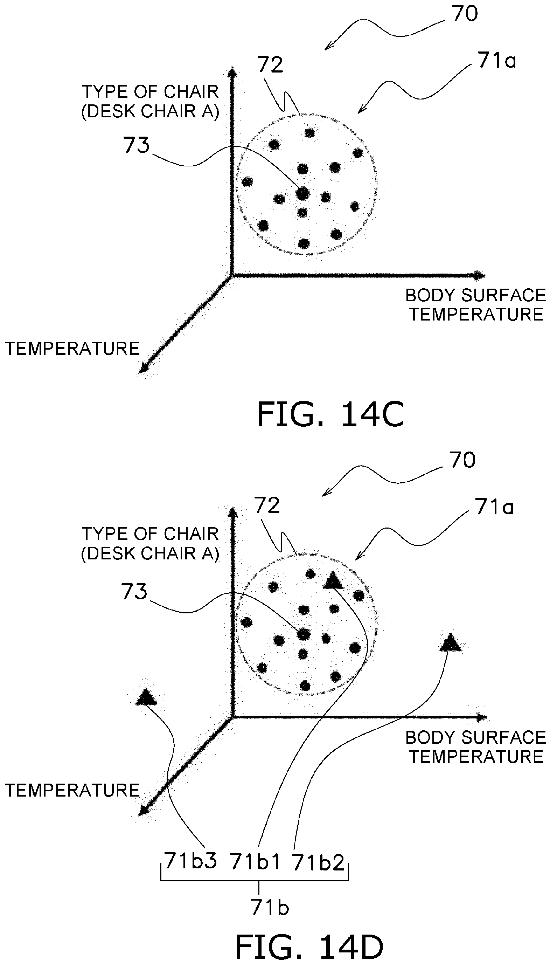

Here, $r^{(i)}$ is a position vector of an i-th past multi-dimensional information point 71a. $r^{(G)}$ is a position vector of the multi-dimensional comfortable region centroid 73. $m_i$ is the weight of the i-th past multi-dimensional information point 71a. In a case of weighting by the past multi-dimensional information point 71a, $m_i$ is adjusted. For example, it is used when past multi-dimensional information points 71a in the morning are desired to be emphasized. In the present embodiment, the multi-dimensional comfortable region centroid 73 in which every $m_i$ is set to 1 is used. In other words, the multi-dimensional comfortable region centroid 73 of the present embodiment coincides with the mean vector of past multi-dimensional information points 71a included in the multi-dimensional comfortable region 72. Fig. 14C illustrates the multi-dimensional comfortable region centroid 73.

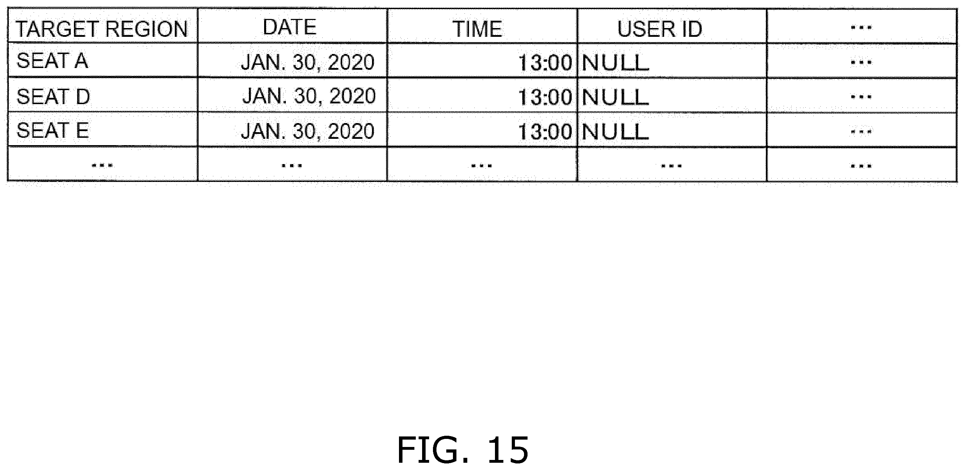

Upon calculating the multi-dimensional comfortable region centroid 73, as illustrated in step S12, the region recommendation device 100 acquires the usage information 11 regarding currently unused target regions 81, using the usage information acquiring unit 10. As illustrated in step S13, if the usage information 11 regarding the currently unused target regions 81 is acquired, the process proceeds to step S15. Fig. 15 illustrates an example of the usage information 11 regarding the currently unused target regions 81. In Fig. 15, "seat A", "seat D", and "seat E" are unused. As illustrated in step S13, if it is not possible to acquire the usage information 11 regarding the currently unused target regions 81, the region recommendation device 100 outputs "there are no currently available regions" on the output device 91a, for example, using the function of the output unit 91, and ends the recommended region determining process as illustrated in step S14.

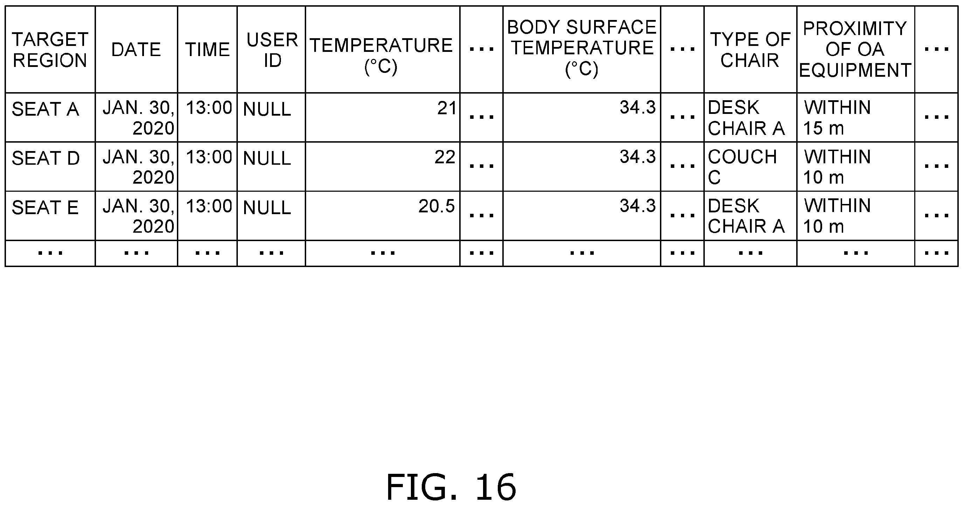

Upon acquiring the usage information 11 regarding the currently unused target regions 81, as illustrated in step S15, the region recommendation device 100 acquires the environmental information 21 and the non-environmental information 31 regarding the target person and the currently unused target regions 81, using the environmental information acquiring unit 20 and the non-environmental information acquiring unit 30. The region recommendation device 100 unifies these pieces of information to acquire the current information 75 in the same manner as when acquiring the past information 74. As the biological information 31a of the non-environmental information 31, current values regarding the target person are used. Fig. 16 illustrates an example of the current information 75.

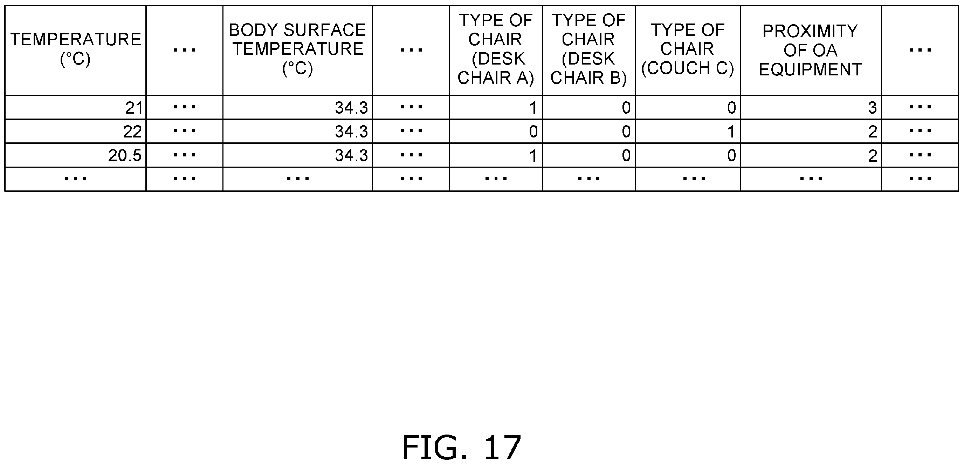

Upon acquiring the current information 75, as illustrated in step S16, the region recommendation device 100 quantifies the current information 75 to acquire the current multi-dimensional information points 71b. The quantification method is the same as that when the past multi-dimensional information points 71a are acquired. Fig. 17 illustrates an example of the current multi-dimensional information points 71b. Furthermore, Fig. 14D illustrates the current multi-dimensional information points 71b in the multi-dimensional space 70. In Fig. 14D, three current multi-dimensional information points 71b1, 71b2, and 71b3 are depicted.

Upon acquiring the current multi-dimensional information points 71b, as illustrated in step S17, the region recommendation device 100 performs data cleaning on the current multi-dimensional information points 71b. The data cleaning method is the same as that for the past multi-dimensional information points 71a. If scaling and reduction of dimensions are performed on the past multi-dimensional information points 71a, the region recommendation device 100 performs the same process on the current multi-dimensional information points 71b.

After the data cleaning on the current multi-dimensional information points 71b, as illustrated in step S18, the region recommendation device 100 defines a distance in the multi-dimensional space 70, and calculates the distance between the multi-dimensional comfortable region centroid 73 and each of the current multi-dimensional information points 71b.

For example, the following Minkowski distance is used as the distance between the multi-dimensional comfortable region centroid 73 and each of the current multi-dimensional information points 71b.

## Math. 2

$$d\left(r^{(G)}, r^{(i)}\right) = \sqrt[p]{\sum_k \left| r_k^{(G)} - r_k^{(i)} \right|^p}$$

Here, $r^{(i)}$ is the position vector of an i-th current multi-dimensional information point 71b. $r_k^{(i)}$ is the value of a k-th component of the i-th current multi-dimensional information point 71b. The Minkowski distance becomes the Manhattan distance when p = 1, and becomes the Euclidean distance when p = 2.

For example, the following Mahalanobis distance is used as the distance between the multi-dimensional comfortable region centroid 73 and each of the current multi-dimensional information points 71b.

Math. 3

$$d\left(r^{(G)} = \mu, \, r^{(i)}\right) = \sqrt{\left(r^{(i)} - \mu\right)^T \Sigma^{-1} \left(r^{(i)} - \mu\right)}$$

Here, $\mu$ and $\Sigma$ are a mean vector and a variance-covariance matrix of the past multi-dimensional information points 71a included in the multi-dimensional comfortable region 72. In the present embodiment, $\mu$ coincides with the multi-dimensional comfortable region centroid 73. Since the Mahalanobis distance is a distance in consideration of variance, scaling of the past multi-dimensional information points 71a and the current multi-dimensional information points 71b may be skipped when the Mahalanobis distance is used.

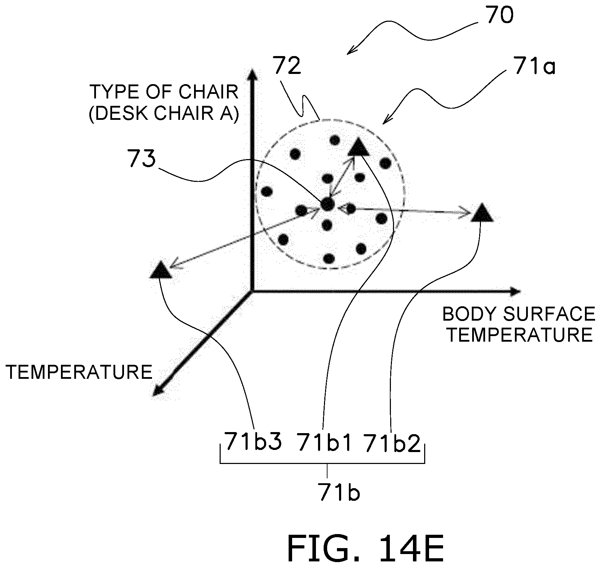

Upon calculating the distance between the multi-dimensional comfortable region centroid 73 and each of the current multi-dimensional information points 71b, as illustrated in step S19, the region recommendation device 100 determines the recommended region R81. The region recommendation device 100 determines, as the recommended region R81, a target region 81 associated with the current multi-dimensional information point 71b closest from the multi-dimensional comfortable region centroid 73. In Fig. 14E, distances from the multi-dimensional comfortable region centroid 73 to the three current multi-dimensional information points 71b1, 71b2, and 71b3 are indicated by double-headed arrows. Since the distance from the multi-dimensional comfortable region centroid 73 to the current multi-dimensional information point 71b1 is the shortest, the target region 81 associated with the current multi-dimensional information point 71b1 is determined as the recommended region R81.

Upon determining the recommended region R81, as illustrated in step S20, the region recommendation device 100 outputs the region information 13 of the recommended region R81 on the output device 91a using the function of the output unit 91.

(4) Features

(4-1)
Conventional seat recommendation devices determine a recommended seat using only the environmental information 21. However, it is not possible to make sufficient determination only with the environmental information 21. The region recommendation device 100 according to the present embodiment determines the recommended region R81 in consideration of, not only the environmental information 21, but also the non-environmental information 31 including the biological information 31a and the region feature information 31b. Therefore, the region recommendation device 100 can determine the recommended region R81 in consideration of more pieces of information than before.

(4-2)
The region recommendation device 100 of the present embodiment quantifies the usage information 11, the environmental information 21, and the non-environmental information 31 as one or more multi-dimensional information points 71 in the multi-dimensional space 70, and determines the recommended region R81. Therefore, the region recommendation device 100 may determine the recommended region R81 by comprehensively quantifying various pieces of information with one measure.

(5) Modifications

(5-1) Modification 1A

In the present embodiment, the region recommendation device 100 determines, as the recommended region R81, the target region 81 associated with the current multi-dimensional information point 71b closest from the multi-dimensional comfortable region centroid 73. However, a plurality of current multi-dimensional information points 71b within a predetermined range from the multi-dimensional comfortable region centroid 73 may be determined as recommended regions R81. In this case, the region recommendation device 100 causes the output device 91a to output the region information 13 of the plurality of recommended regions R81. As a result, the target person can select a desired region from the plurality of recommended regions R81.

(5-2)

Although the embodiment of the present disclosure has been described above, it should be understood that various changes can be made on the forms and details without departing from the spirit and scope of the present disclosure described in the claims.

**REFERENCE SIGNS LIST**

| 10 | usage information acquiring unit |
|---|---|
| 11 | usage information |
| 20 | environmental information acquiring unit |
| 21 | environmental information |
| 30 | non-environmental information acquiring unit |
| 31 | non-environmental information |
| 31a | biological information |
| 31b | region feature information |
| 40 | information storage unit |
| 50 | recommended region determining unit |
| 70 | multi-dimensional space |
| 71 | multi-dimensional information point |
| 71a | past multi-dimensional information point |
| 71b | current multi-dimensional information point |
| 72 | multi-dimensional comfortable region |
| 73 | multi-dimensional comfortable region centroid |
| 80 | target space |
| 81 | target region |
| R81 | recommended region |
| 100 | region recommendation device |

**CITATION LIST**

**PATENT LITERATURE**

PTL 1: Japanese Unexamined Patent Application Publication No. 2014-214975

**Claims**

1.  A region recommendation device (100) for determining one or more recommended regions (R81) to be recommended to a target person from among a plurality of target regions (81) in a target space (80), the region recommendation device comprising:

    a usage information acquiring unit (10) that acquires usage information (11) including at least one of a past usage history of the target regions and current availability of the target regions;
    an environmental information acquiring unit (20) that acquires environmental information (21) regarding an indoor environment in the target regions;
    a non-environmental information acquiring unit (30) that acquires, as non-environmental information (31), at least one of biological information (31a) of a person in the target space and region feature information (31b) regarding equipment and peripheral information in the target regions;
    an information storage unit (40) that stores information acquired by the usage information acquiring unit, the environmental information acquiring unit, and the non-environmental information acquiring unit; and
    a recommended region determining unit (50) that determines the one or more recommended regions on the basis of the information stored in the information storage unit.

2.  The region recommendation device according to claim 1, wherein the recommended region determining unit quantifies the information stored in the information storage unit as one or more multi-dimensional information points (71) in a multi-dimensional space (70), calculates a degree of similarity between the multi-dimensional information points, and determines the one or more recommended regions.

3. The region recommendation device according to claim 1 or 2, wherein the environmental information includes at least one of a temperature, a humidity, an illuminance, a color of illumination, and a noise.

4. The region recommendation device according to any one of claims 1 to 3, wherein the biological information includes at least one of a body surface temperature, a core body temperature, and a pulse.

5. The region recommendation device according to any one of claims 1 to 4, wherein the region feature information includes at least one of a type of chair, a type of table, personal use or shared use, whether a window is near, a population density, presence or absence of an outlet, and proximity of OA equipment in the target regions.

6. The region recommendation device according to any one of claims 2 to 5, wherein, regarding the target person and the target regions, the recommended region determining unit quantifies the usage information, the environmental information, and the non-environmental information of a past as one or more past multi-dimensional information points (71a) in the multi-dimensional space, and quantifies the usage information, the environmental information, and the non-environmental information of present as one or more current multi-dimensional information points (71b) in the multi-dimensional space.

7. The region recommendation device according to claim 6, wherein the recommended region determining unit defines a multi-dimensional comfortable region (72) including all or some of the one or more past multi-dimensional information points, calculates a multi-dimensional comfortable region centroid (73) that is the centroid of the one or more past multi-dimensional information points included in the multi-dimensional comfortable region, and determines the one or more recommended regions on the basis of the multi-dimensional comfortable region centroid and the one or more current multi-dimensional information points.

80    83    100

81a    81b    81c

81

# FIG. 1

FIG. 2A

FIG. 2B

FIG. 2C

| TARGET REGION | RANGE | COLOR OF ILLUMINATION | TYPE OF CHAIR | TYPE OF TABLE | PERSONAL USE OR SHARED USE | WHETHER WINDOW IS NEAR | PRESENCE OR ABSENCE OF OUTLET | PROXIMITY OF OA EQUIPMENT | ... |
|---|---|---|---|---|---|---|---|---|---|
| SEAT A | RANGE A | INCANDESCENT | DESK CHAIR A | DESK TABLE B | PERSONAL USE | YES | PRESENT | WITHIN 15 m | ... |
| SEAT B | RANGE B | NATURAL WHITE | COUCH C | DINING TABLE A | SHARED USE | NO | ABSENT | WITHIN 10 m | ... |
| SEAT C | RANGE C | DAYLIGHT | DESK CHAIR B | DESK TABLE C | SHARED USE | NO | PRESENT | WITHIN 5 m | ... |
| ... | ... | ... | ... | ... | ... | ... | ... | ... | ... |

# FIG. 3

| USER ID | NAME | FACE IMAGE | ... |
|---|---|---|---|
| 100 | ○○ | /pic/aaa.jpeg | ... |
| 200 | ×× | /pic/bbb.jpeg | ... |
| 300 | △△ | /pic/ccc.jpeg | ... |
| 400 | □□ | /pic/ddd.jpeg | ... |
| ... | ... | ... | ... |

FIG. 4

| TARGET REGION | DATE | TIME | USER ID | ... |
|---|---|---|---|---|
| SEAT A | JAN. 29, 2020 | 10:00 | 100 | ... |
| SEAT A | JAN. 29, 2020 | 11:00 | 100 | ... |
| SEAT B | JAN. 29, 2020 | 10:00 | 200 | ... |
| SEAT B | JAN. 29, 2020 | 11:00 | NULL | ... |
| SEAT C | JAN. 29, 2020 | 10:00 | 300 | ... |
| SEAT C | JAN. 29, 2020 | 11:00 | 400 | ... |
| ... | ... | ... | ... | ... |

FIG. 5

EP 4 131 097 A1

| TARGET REGION | DATE | TIME | TEMPERATURE (°C) | HUMIDITY (%) | ILLUMINANCE (lx) | COLOR OF ILLUMINATION | NOISE (dB) | ... |
|---|---|---|---|---|---|---|---|---|
| SEAT A | JAN. 29, 2020 | 10:00 | 20 | 50 | 500 | INCANDESCENT | 40 | ... |
| SEAT A | JAN. 29, 2020 | 11:00 | 20 | 51 | 510 | INCANDESCENT | 39 | ... |
| SEAT B | JAN. 29, 2020 | 10:00 | 21 | 49 | 750 | NATURAL WHITE | 30 | ... |
| SEAT B | JAN. 29, 2020 | 11:00 | 20.5 | 49 | 748 | NATURAL WHITE | 28 | ... |
| SEAT C | JAN. 29, 2020 | 10:00 | 22 | 52 | 300 | DAYLIGHT | 20 | ... |
| SEAT C | JAN. 29, 2020 | 11:00 | 22 | 52 | 310 | DAYLIGHT | 21 | ... |
| ... | ... | ... | ... | ... | ... | ... | ... | ... |

FIG. 6

| USER ID | DATE | TIME | BODY SURFACE TEMPERATURE (°C) | CORE BODY TEMPERATURE (°C) | PULSE (TIMES/MINUTE) | ... |
|---|---|---|---|---|---|---|
| 100 | JAN. 29, 2020 | 10:00 | 34.5 | 36.5 | 70 | ... |
| 100 | JAN. 29, 2020 | 11:00 | 34.3 | 36.4 | 75 | ... |
| 200 | JAN. 29, 2020 | 10:00 | 35 | 37 | 80 | ... |
| 300 | JAN. 29, 2020 | 10:00 | 34 | 36.8 | 90 | ... |
| 400 | JAN. 29, 2020 | 11:00 | 33 | 36.3 | 65 | ... |
| ... | ... | ... | ... | ... | ... | ... |

# FIG. 7

EP 4 131 097 A1

| TARGET REGION | DATE | TIME | TYPE OF CHAIR | TYPE OF TABLE | PERSONAL USE OR SHARED USE | WHETHER WINDOW IS NEAR | POPULATION DENSITY (NUMBER OF PEOPLE) | PRESENCE OR ABSENCE OF OUTLET | PROXIMITY OF OA EQUIPMENT | ... |
|---|---|---|---|---|---|---|---|---|---|---|
| SEAT A | JAN. 29, 2020 | 10:00 | DESK CHAIR A | DESK TABLE B | PERSONAL USE | YES | 2 | PRESENT | WITHIN 15 m | ... |
| SEAT A | JAN. 29, 2020 | 11:00 | DESK CHAIR A | DESK TABLE B | PERSONAL USE | YES | 3 | PRESENT | WITHIN 15 m | ... |
| SEAT B | JAN. 29, 2020 | 10:00 | COUCH C | DINING TABLE A | SHARED USE | NO | 4 | ABSENT | WITHIN 10 m | ... |
| SEAT B | JAN. 29, 2020 | 11:00 | COUCH C | DINING TABLE A | SHARED USE | NO | 4 | ABSENT | WITHIN 10 m | ... |
| SEAT C | JAN. 29, 2020 | 10:00 | DESK CHAIR B | DESK TABLE C | SHARED USE | NO | 3 | PRESENT | WITHIN 5 m | ... |
| SEAT C | JAN. 29, 2020 | 11:00 | DESK CHAIR B | DESK TABLE C | SHARED USE | NO | 4 | PRESENT | WITHIN 5 m | ... |
| ... | ... | ... | ... | ... | ... | ... | ... | ... | ... | ... |

FIG. 8

FIG. 9

START

S1 — RECEIVE INSTRUCTION TO START PROCESS

S2 — PERFORM AUTHENTICATION OF TARGET PERSON

S3 — IS TARGET PERSON AUTHENTICATED?

NO → S4 — REGISTER USER INFORMATION OF TARGET PERSON AND END PROCESS

YES

S5 — ACQUIRE USAGE INFORMATION OF PAST OF TARGET PERSON

S6 — IS USAGE INFORMATION ACQUIRED?

NO → S7 — END PROCESS

YES

S8 — JOIN ENVIRONMENTAL INFORMATION AND NON-ENVIRONMENTAL INFORMATION WITH USAGE INFORMATION OF PAST TO ACQUIRE PAST INFORMATION

S9 — QUANTIFY PAST INFORMATION TO ACQUIRE PAST MULTI-DIMENSIONAL INFORMATION POINTS

S10 — DEFINE MULTI-DIMENSIONAL COMFORTABLE REGION

S11 — CALCULATE CENTROID OF PAST MULTI-DIMENSIONAL INFORMATION POINTS

S12 — ACQUIRE USAGE INFORMATION REGARDING CURRENTLY UNUSED TARGET REGIONS

S13 — IS USAGE INFORMATION ACQUIRED?

NO → S14 — END PROCESS

YES

①

FIG. 10A

① 

S15 ⌇ COLLECT ENVIRONMENTAL INFORMATION AND NON-ENVIRONMENTAL INFORMATION REGARDING TARGET PERSON AND CURRENTLY UNUSED TARGET REGIONS TO ACQUIRE CURRENT INFORMATION

S16 ⌇ QUANTIFY CURRENT INFORMATION TO ACQUIRE CURRENT MULTI-DIMENSIONAL INFORMATION POINTS

S17 ⌇ PERFORM DATA CLEANING ETC. ON CURRENT MULTI-DIMENSIONAL INFORMATION POINTS

S18 ⌇ DEFINE DISTANCE IN MULTI-DIMENSIONAL SPACE AND CALCULATE DISTANCE BETWEEN MULTI-DIMENSIONAL COMFORTABLE REGION CENTROID AND EACH OF CURRENT MULTI-DIMENSIONAL INFORMATION POINTS

S19 ⌇ DETERMINE RECOMMENDED REGION

S20 ⌇ OUTPUT RECOMMENDED REGION

END

# FIG. 10B

| TARGET REGION | DATE | TIME | USER ID | ... |
|---|---|---|---|---|
| SEAT C | DEC. 10, 2019 | 17:00 | 100 | ... |
| SEAT B | JAN. 15, 2020 | 13:00 | 100 | ... |
| SEAT B | JAN. 15, 2020 | 14:00 | 100 | ... |
| SEAT B | JAN. 15, 2020 | 15:00 | 100 | ... |
| SEAT B | JAN. 15, 2020 | 16:00 | 100 | ... |
| SEAT A | JAN. 29, 2020 | 10:00 | 100 | ... |
| SEAT A | JAN. 29, 2020 | 11:00 | 100 | ... |
| ... | ... | ... | ... | ... |

FIG. 11

EP 4 131 097 A1

| TARGET REGION | DATE | TIME | USER ID | TEMPERATURE (°C) | ... | BODY SURFACE TEMPERATURE (°C) | ... | TYPE OF CHAIR | PROXIMITY OF OA EQUIPMENT | ... |
|---|---|---|---|---|---|---|---|---|---|---|
| SEAT C | DEC. 10, 2019 | 17:00 | 100 | 22.1 | ... | 34.3 | ... | DESK CHAIR B | WITHIN 5 m | ... |
| SEAT B | JAN. 15, 2020 | 13:00 | 100 | 20.5 | ... | 34.1 | ... | COUCH C | WITHIN 10 m | ... |
| SEAT B | JAN. 15, 2020 | 14:00 | 100 | 20.4 | ... | 34.2 | ... | COUCH C | WITHIN 10 m | ... |
| SEAT B | JAN. 15, 2020 | 15:00 | 100 | 20.3 | ... | 34.9 | ... | COUCH C | WITHIN 10 m | ... |
| SEAT B | JAN. 15, 2020 | 16:00 | 100 | 20.5 | ... | 34.1 | ... | COUCH C | WITHIN 10 m | ... |
| SEAT A | JAN. 29, 2020 | 10:00 | 100 | 20 | ... | 34.5 | ... | DESK CHAIR A | WITHIN 15 m | ... |
| SEAT A | JAN. 29, 2020 | 11:00 | 100 | 20 | ... | 34.3 | ... | DESK CHAIR A | WITHIN 15 m | ... |
| ... | ... | ... | ... | ... | ... | ... | ... | ... | ... | ... |

FIG. 12

EP 4 131 097 A1

| TEMPERATURE (°C) | ... | BODY SURFACE TEMPERATURE (°C) | ... | TYPE OF CHAIR (DESK CHAIR A) | TYPE OF CHAIR (DESK CHAIR B) | TYPE OF CHAIR (COUCH C) | PROXIMITY OF OA EQUIPMENT | ... |
|---|---|---|---|---|---|---|---|---|
| 22.1 | ... | 34.3 | ... | 0 | 1 | 0 | 1 | ... |
| 20.5 | ... | 34.1 | ... | 0 | 0 | 1 | 2 | ... |
| 20.4 | ... | 34.2 | ... | 0 | 0 | 1 | 2 | ... |
| 20.3 | ... | 34.9 | ... | 0 | 0 | 1 | 2 | ... |
| 20.5 | ... | 34.1 | ... | 0 | 0 | 1 | 2 | ... |
| 20 | ... | 34.5 | ... | 1 | 0 | 0 | 3 | ... |
| 20 | ... | 34.3 | ... | 1 | 0 | 0 | 3 | ... |
| ... | ... | ... | ... | ... | ... | ... | ... | ... |

# FIG. 13

70

71a

TYPE OF CHAIR
(DESK CHAIR A)

BODY SURFACE
TEMPERATURE

TEMPERATURE

## FIG. 14A

70

72

71a

TYPE OF CHAIR
(DESK CHAIR A)

BODY SURFACE
TEMPERATURE

TEMPERATURE

## FIG. 14B

FIG. 14C

FIG. 14D

FIG. 14E

| TARGET REGION | DATE | TIME | USER ID | ... |
|---|---|---|---|---|
| SEAT A | JAN. 30, 2020 | 13:00 | NULL | ... |
| SEAT D | JAN. 30, 2020 | 13:00 | NULL | ... |
| SEAT E | JAN. 30, 2020 | 13:00 | NULL | ... |
| ... | ... | ... | ... | ... |

FIG. 15

EP 4 131 097 A1

| TARGET REGION | DATE | TIME | USER ID | TEMPERATURE (°C) | ... | BODY SURFACE TEMPERATURE (°C) | ... | TYPE OF CHAIR | PROXIMITY OF OA EQUIPMENT | ... |
|---|---|---|---|---|---|---|---|---|---|---|
| SEAT A | JAN. 30, 2020 | 13:00 | NULL | 21 | ... | 34.3 | ... | DESK CHAIR A | WITHIN 15 m | ... |
| SEAT D | JAN. 30, 2020 | 13:00 | NULL | 22 | ... | 34.3 | ... | COUCH C | WITHIN 10 m | ... |
| SEAT E | JAN. 30, 2020 | 13:00 | NULL | 20.5 | ... | 34.3 | ... | DESK CHAIR A | WITHIN 10 m | ... |
| ... | ... | ... | ... | ... | ... | ... | ... | ... | ... | ... |

FIG. 16

EP 4 131 097 A1

| TEMPERATURE (°C) | ... | BODY SURFACE TEMPERATURE (°C) | ... | TYPE OF CHAIR (DESK CHAIR A) | TYPE OF CHAIR (DESK CHAIR B) | TYPE OF CHAIR (COUCH C) | PROXIMITY OF OA EQUIPMENT | ... |
|---|---|---|---|---|---|---|---|---|
| 21 | ... | 34.3 | ... | 1 | 0 | 0 | 3 | ... |
| 22 | ... | 34.3 | ... | 0 | 0 | 1 | 2 | ... |
| 20.5 | ... | 34.3 | ... | 1 | 0 | 0 | 2 | ... |
| ... | ... | ... | ... | ... | ... | ... | ... | ... |

FIG. 17

**INTERNATIONAL SEARCH REPORT**

| International application No. |
|---|
| PCT/JP2021/012463 |

A. CLASSIFICATION OF SUBJECT MATTER
G06Q 10/06(2012.01)i
FI: G06Q10/06 302

According to International Patent Classification (IPC) or to both national classification and IPC

B. FIELDS SEARCHED

Minimum documentation searched (classification system followed by classification symbols)
G06Q10/00-99/00

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-43039 A (FUJI XEROX CO., LTD.) 01 March | 1, 3-5 |
| A | 2012 (2012-03-01) paragraphs [0025]-[0069] | 2, 6-7 |
| | | |
| Y | JP 2018-73333 A (ITOKI CORPORATION) 10 May 2018 | 1, 3-5 |
| A | (2018-05-10) paragraphs [0001], [0024]-[0066] | 2, 6-7 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 May 2021 (31.05.2021) | 08 June 2021 (08.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/012463

| Patent Documents referred in the Report | Publication Date | Patent Family | Publication Date |
|---|---|---|---|
| JP 2012-43039 A | 01 Mar. 2012 | US 2012/0038481 A1 paragraphs [0034]-[0129] CN 102376019 A | |
| JP 2018-73333 A | 10 May 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014214975 A